# EUROPEAN PATENT SPECIFICATION

(11) **EP 0 549 112 B1**
(45) Date of publication and mention of the grant of the patent: **15.09.1999**
(21) Application number: 92309817.2
(22) Date of filing: 27.10.1992
(51) Int. Cl.: G06F 9/44, G06F 9/46

(54) **Computer system with programming architecture and method**
Rechnersystem mit Architektur und Verfahren zur Programmierung
Système d'ordinateur avec architecture et procédé de programmation

(30) Priority: 26.12.1991 JP 34556391; 30.07.1992 JP 20398392
(43) Date of publication of application: 30.06.1993
(73) Proprietor: INSTITUTE OF SOFTWARE SCIENTIFICAL CONSTRUCTIONS, Tokyo (JP); JR EAST JAPAN INFORMATION SYSTEMS CO., LTD., Tokyo (JP)
(72) Inventor: Negoro, Fumio, Yokohama-shi, Kanagawa (JP); Murata, Tetsuri, Ota-ku, Tokyo (JP); Sawamura, Kozo, Kawasaki-shi, Kanagawa (JP); Yuki, Junichi, Sakura-shi, Chiba (JP); Murai, Hiroshi, Machida-shi, Tokyo (JP); Onuki, Masayasu, Kawasaki-shi, Kanagawa (JP); Ito, Norihito, Kawasaki-shi, Kanagawa (JP); Jiang, Weiguo, Tokyo (JP); Yonemura, Masako, Yokohama-shi, Kanagawa (JP)
(74) Representative: Finnie, Peter John

(56) References cited:
- WO-A-91/08543
- IEEE SOFTWARE. vol. 7, no. 4, July 1990, LOS ALAMITOS, CA, US pages 29 - 36 K.-P. VO 'IFS: A TOOL TO BUILD APPLICATION SYSTEMS'
- NEC RESEARCH AND DEVELOPMENT. no. 97, April 1990, TOKYO, JP pages 85 - 90 M. KURIYAMA ET AL. 'THE HIGH-PRODUCTIVITY LANGUAGE SYSTEM IDL II'

## Description

The present invention relates generally to a computer system with a novel architecture facilitating programming of dedicated programs for various purpose. More specifically, the invention relates to a computer system which can establish programs easily adapted to later modification of program logic, processes, specifications and so forth. The present invention also relates to a method of programming according to the novel architecture.

As an ideal programming architecture, there should be provided characteristics to have high reliability, to be easily understood, to be effectively programmed, to be easily modified. It can be said as primary and most important task in the development of software to stably and efficiently provide high quality programs. In general, to realize the ideal program, it is important to have suitable structure of the programs, in which the overall program is hierarchically divided into a plurality of element groups having high independence, and respective elements have to be configured into so-called aligned structures.

For accomplishing this task, various approaches have been attempted. As essential principal or theory in designing programs, there have been introduced approaches of "modularization", "abstraction", "information hiding", "localization". These theories have been discussed in various publications associated with software technologies, and it may not be necessary to discuss them here any further.

According to the recognition for the effectiveness of the modularization, abstraction, information hiding, localization, some studies for practical application of those theories on the practical program designs have been made and some typical processes have been known.

### (1) Modularization Designing

As effective method for designing a complicated system, the method to divide the system into a plurality of portions for nominally reducing complexity (so-called "divide-and-conquer") has been conventionally known as modularization method. In the modularization designing, there have been various proposals for technologies in separation into proper modules and determination of the structures of the programs in the modules. In particular, the manner of division of the modules will become the important matter for evaluation of understanding ability, easy modification ability, effectiveness and so forth.

### (2) Hierarchical programming

It can be considered that the various methods for hierarchically establishing the programs are the methods applying theory on time sequence of consideration. Although there are some minor differences, the structured programming, stepwise detailing method, top down programming may be considered to be included in this category.

### (3) Use of Abstract data

An abstract data is a data independent of a realization method (data structure or algorithm for the data structure) and completely defined by its behavior. The behavior is defined by several operations established thereon. Since the portion realizing the abstract data and the portion utilizing the abstract data are associated only through the several operations, the locality is sufficiently high. The concept of the abstract data has been developed in association with study for the structured programming or module designing method. Therefore, the abstract data can be means for dividing a problem paying attention only to the external behavior regardless of internal structure of data, in program designing. Also, the programming employing the abstract data can be easily verified and thus hold high reliability.

### (4) Jackson method

In Jackson method, the program is designed as a data flow system constituted of a plurality of processes. No relationship in execution is established between the processes. Therefore, respective processes are cooperated only through the data. In comparison with a functional dividing type module designing method, this method may easily increase the independence of respective portions. The Jackson method has been developed as a method for detailed design after division of the program. However, since it also proposes a method for structured designing method, it can be said as unitary programming designing method.

The above-mentioned program designing technologies of course achieve certain gain in theoretical study. However such method cannot provide concrete and practical guidance for remarkably improving productivity and quality of the programs for field engineers (system engineers) designing dedicated programs for a specific operation, in the field. That is, the various designing method of the computer programs conventionally proposed still have high degree of abstractness and have been mere difficult theories.

Therefore, such programming methods may assist only for a small number of high level engineers for enhancing their programming skill. In the field engineering in program designing, there have been left various problems unsolved and the conventional processes which are holding such problems have been maintained to be practically performed by most programming engineers. Namely, since various programming engineers having different levels of knowledge and skill generate programs with their own styles and habits, the quality of the programs can be significantly fluctuated to create serious problems in management of the systems. Also, depending upon increasing of the size of the system, lowering of productivity becomes the significant problem.

On the other hand, in program designing for a dedicated system specifically adapted to a specific task or tasks, such as machine control, machine or industrial system designing, trade management, production management, stock management, supply management, finance management, personnel management, it frequently happens that modification of the specification of the programs or details of the programs at various stages of programming operation is necessary. In many cases, the programming operation, even detail program designing or practical programming operation, is started with leaving some uncertain or undetermined factors. Such uncertain factors are studied during programming operation. If some problem is found with respect to the uncertain factors, the program specification and/or the detailed designs of the programs are modified to solve the problem. Such modification can influence for various portion of the programs and thus requires additional load for analyzing overall on-going programs to find the portion affected by the modification. This frequently requires review of the entire programs in the systems for fixing up or adapting the affected portions to the necessary modification. The tendency of necessity of somewhat bottom-up and redundant program designing operation clearly lowers the productivity of programming and somewhat lowers the reliability of the entire system. Furthermore, such later adaption or modification of the programs tends to increase complication of the program and to lower mutual independence of the programs in the system.

IEEE software 7 (1990) July No. 4, discloses an interpretive frame with System Used As A Tool To Building Application Systems. The IFS separates high level design and user interface programming from domain specific programming making tool re-use more manageable. It offers a language suitable for implementation systems of interconnected tasks.

WO91/08543 discloses a computer-aided software engineering facility (CASE) for providing a method for generating source code and executable computer programs in a language supported by various hardware entities in the multiprocessing system, using the entity-relationship model and the high level rules language models that are distributable across multiple hardware environment or platforms.

The present invention is intended to solve the problems in the prior art, as set forth above, and propose a new and useful architecture in computer design and process of programming according thereto.

Therefore, it is an object of the present invention to provide a new and useful computer system which facilitates simplication of computer programs establishing a dedicated computer system adapted to a specific task, and thereby makes it easy to program and to modify the already established programs.

Another object of the invention is to provide a new and useful, and widely applicable program structure which is applicable in establishing a dedicated computer system, such as for machine control, machine or industrial system designing, trade management, production management, stock management, supply management, finance management, personnel management.

A further object of the invention is to provide a method for establishing a computer software system according to the new and useful architecture in the computer system of the invention.

According to a first aspect of the present invention, a computer system for establishing an application adapted dedicated system operable on a plurality of data items for performing a plurality of functional processes for said data items, comprises:
an arithmetic means for performing processes defined by an on-going program describing manner and schedule of processing;
a memory means for storing a plurality of information, said memory means including a first storage means for storing a plurality of program segments;
characterised by each of said program segments having an assigned one of said data items and an elemental single process which performs a functional process for said data item and is executable independently of other program segments;
a second storage means for storing at least one governing program for systematically establishing interrelationship between respective program segments for sequential operation thereof; and,
means for triggering said governing program for systematic execution of respective program segments by said arithmetic means in a manner governed by said governing program.

According to a second aspect of the present invention, there is provided a computer system according to the first aspect of the present invention wherein said plurality of data items consists of a first data item and a second data item and wherein said functional processes comprise a sequence of first and second elementary processes each essentially including single data processing steps, and wherein each of said program segments contains one of said first and second elementary processes.

In the preferred construction, the first and second data items correspond to data items in a data file to be handled. Also, the first elementary process may be one of a data check process, data write in process, an arithmetic process so forth.

According to a third aspect of the present invention, there is provided a computer system according to the second aspect of the present invention wherein said sequence of first and second elementary processes has a minimum possible number of processing steps.

According to a fourth aspect of the present invention, a method for establishing an application adapted dedicated computer system, operable on a plurality of data items for performing a plurality of functional processes for said data items, comprises the steps of:
establishing a plurality of program segments, each of which is exclusively assigned for one of said data items and having an elemental single process which performs a functional process for said data item and is executable independently of other program segments; and,
establishing a governing program for establishing systematic interrelationship between said program segments for performing a sequence of processes adapted to the dedicated application.

The present invention will be understood more fully from the detailed description given herebelow and from the accompanying drawings of the preferred embodiment of the invention, which, however, should not be taken to be limitative to the invention, but are for illustration and understanding only.

In the drawings:
**Fig. 1** is a schematic and explanatory block diagram of a computer system according to the present invention;
**Fig. 2** is an explanatory illustration showing general structure of a word/logic (W/L) unit segment employed in the architecture of the shown embodiment of the computer system according to the present invention;
**Fig. 3** is an explanatory illustration showing imaginary arrangement of the W/L unit segments in a word/logic unit segment array employed in the computer system of Fig. 1;
**Fig. 4** is an explanatory flowchart showing process performed by a manager program governing execution of respective W/L unit segment;
**Figs. 5** to **7** show a sequence of flowchart showing examples of the manager program applicable for a dedicated trade management system; and
**Figs. 8** to **10** show a sequence of flowchart showing another example of the manager program for a dedicated accounting and financing management system.

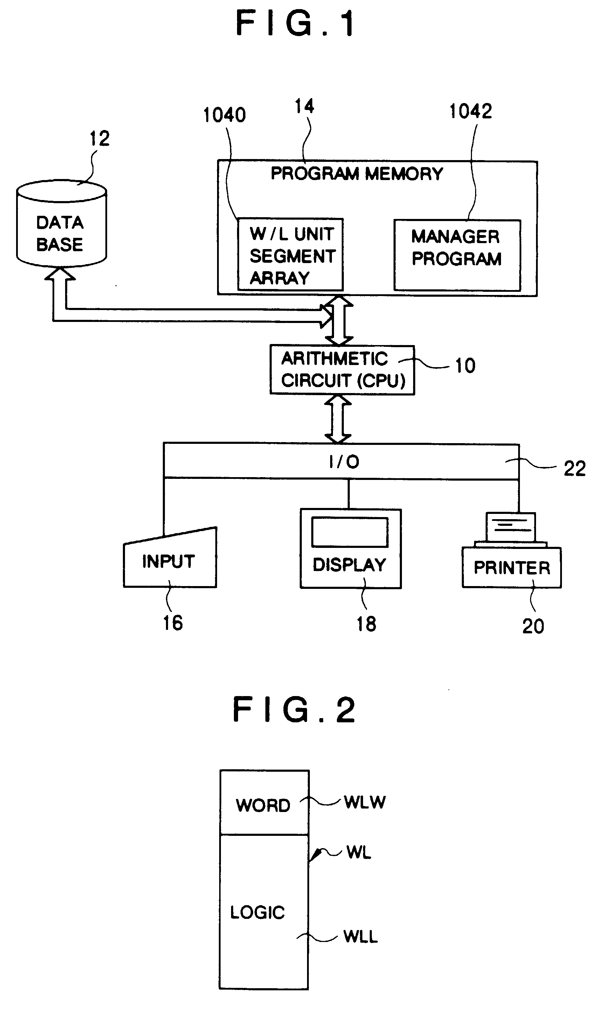

Referring now the drawings, particularly to **Fig. 1,** the preferred embodiment, a computer system with a novel and unique architecture for easy programming, includes an arithmetic circuit **10** which generally comprises a central processing unit (CPU). As in the standard known computer system, the arithmetic circuit **10** is connected to memories forming a data base **12** and a program memory **14.** Also, the arithmetic circuit **10** is connected to various peripheral devices, such as an input device **16,** such as a key board, scanner, digitizer, touch panel or so forth, a display unit **18,** a printer **20**, a plotter, a remote terminal, a host computer or so forth, via an input/output (I/O) unit **22.** As can be appreciated, the shown computer system can be realized any type of the computer systems which is provided capability of read/write function of data, processing data and so forth.

The shown embodiment of the computer system is distinguished from any of known computer systems in the architecture in programming and executing programs. For this purpose, the program memory **14** in the shown embodiment incorporates a word/logic (W/L) unit segment array **1040** and a manager program storage **1042.** The W/L unit segment array **1040** is designed for storing a plurality of word/logic unit segments which will be discussed later in detail. The manager program storage **1042** stores one or more manager programs which govern behavior of each W/L unit segment and will be discussed later.

For fully understanding the architecture employed in the present invention, it is extremely important to fully understand the concept of the W/L unit segment employed in the present invention. In general, the W/L unit segment is considered as a possible shortest or simplest program established for processing a specific word. The "word" used throughout the disclosure represents any predetermined data or data sequence of a predetermined number of digit. Also, the wording "word" may be representative of a name given for a specific process.

As can be appreciated, a sequence of computer program for accomplishing necessary processes for a specific word requires a plurality of individual processes, such as checking data, performing arithmetic operation, reading out, writing in or so forth. In the normal or conventional computer programming technology, these processes are established as a sequence of or a single series of programs inherently associated with each other in such an extent that a modification in one process may influence for other processes to require associated modification thereof. The W/L unit segment employed in the present invention is quite distinct from such conventional architecture of the computer system. As shown in **Fig. 2,** the W/L unit segment **WL** includes a word data area **WLW** which stores the specific word assigned therefor, and a logic data area **WLL** storing a specific and one of the simplest and essentially single process to be performed with respect to the assigned word. A plurality of W/L unit segments **WL** is established in terms of one specific word to accomplish all necessary processes for the specific word.

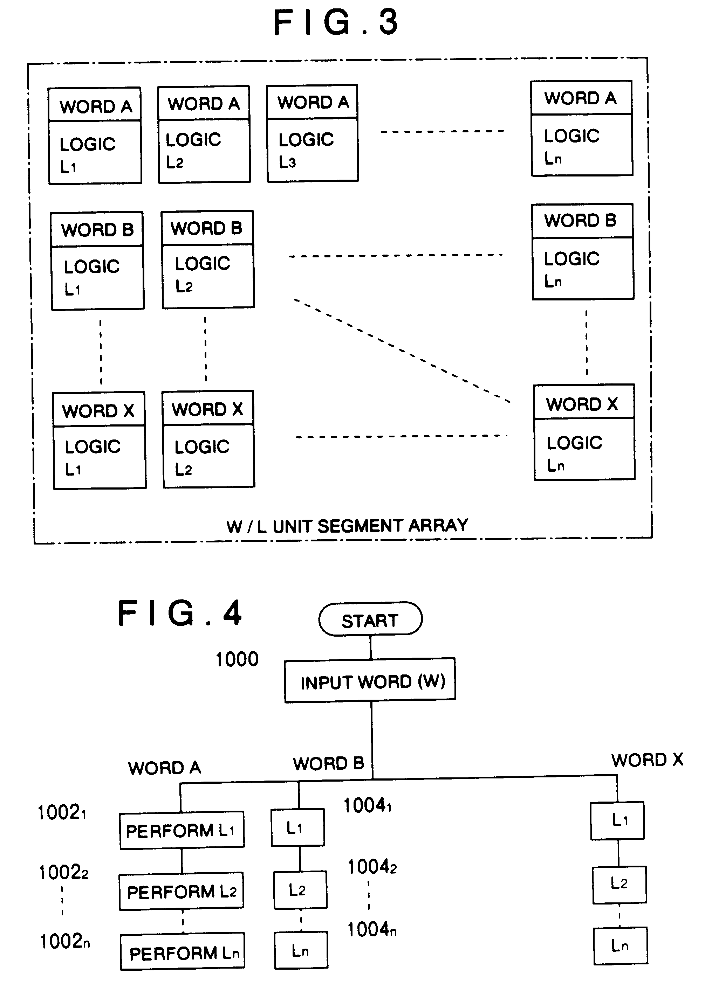

For example, assuming that the specific word assigned is 5 digit character data, data items associated with the word are a date, number, identification human perceptive name (character), classification (number, character or possibly combination thereof), and required processes are an attribute check of input data identifying the word, a digit number check of the input data identifying the word, a consistency check between the assigned word and the input data, an arithmetic operation of the selected data item with the selected data item of other word, an arithmetic operation of the selected data with a selected internal data, an arithmetic operation of the selected data item with a selected internal data of other word, storing the data item or the result of arithmetic operation in the database, the W/L unit segment is established for each required process in terms of the assigned word. Therefore, in the foregoing example, seven W/L unit segments respectively for the attribute check of input data identifying the word, the digit number check of the input data identifying the word, the consistency check between the assigned word and the input data, the arithmetic operation of the selected data item with the selected data item of other word, the arithmetic operation of the selected data with the selected internal data, the arithmetic operation of the selected data item with the selected internal data of other word, storing the data item or the result of arithmetic operation in the database, are established. The W/L unit segments thus established are stored in the W/L unit segment array **1040** in terms of the assigned words for assessing in terms thereof, as shown in **Fig. 3.**

It should be noted that the illustration in **Fig. 3** is simply for illustration. In the example of **Fig. 3,** each W/L unit segment can be executed in the arithmetic circuit **10** independently of other W/L unit segments are established with respect to the words **A, B, ..... X.** Also, for respective words **A, B, .... X,** logices **L**_{**1**}**, L**_{**2**} **... L**_{**n**} are combined for establishing respective W/L unit segments.

**Fig. 4** shows an example of the manager program governing the behavior of respective of the W/L unit segment WL. As shown, the manager program is responsive to an input of the word **W** at a step **1000.** Then, depending upon the input word with the data items associated thereto, the manager program sequentially triggers the W/L unit segments associated with the input word according to a predetermined order. Namely, when the input word is **A,** the processes **1002**_{**1**} to **1002**_{**n**} are performed. Similarly, when the input word is **B,** the processes **1004**_{**1**} to **1004**_{**n**} are performed sequentially.

As can be seen herefrom, since the manager program is required to govern only the order of execution of the W/L unit segments associated with the input specific word, it can be maintained to be simply enough to be easily understood and modified. Also, as set out above, since the logic in each W/L unit segment contains the possible simplest form of process, each individual W/L unit segment can be simple enough to be easily understood and modified.

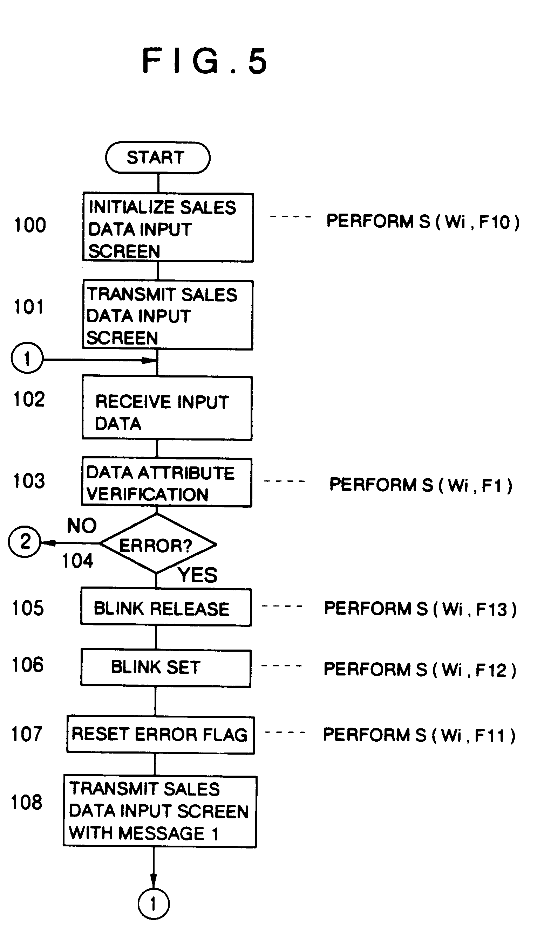

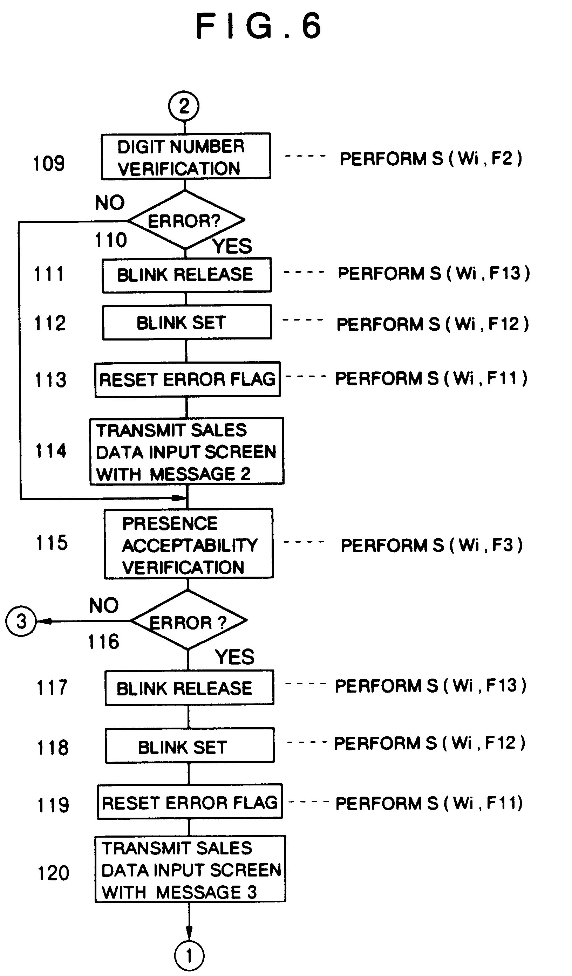

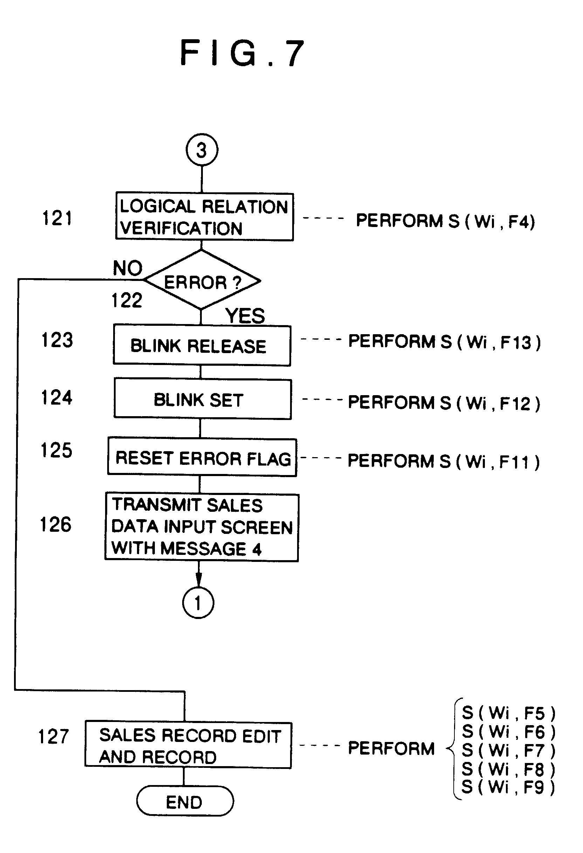

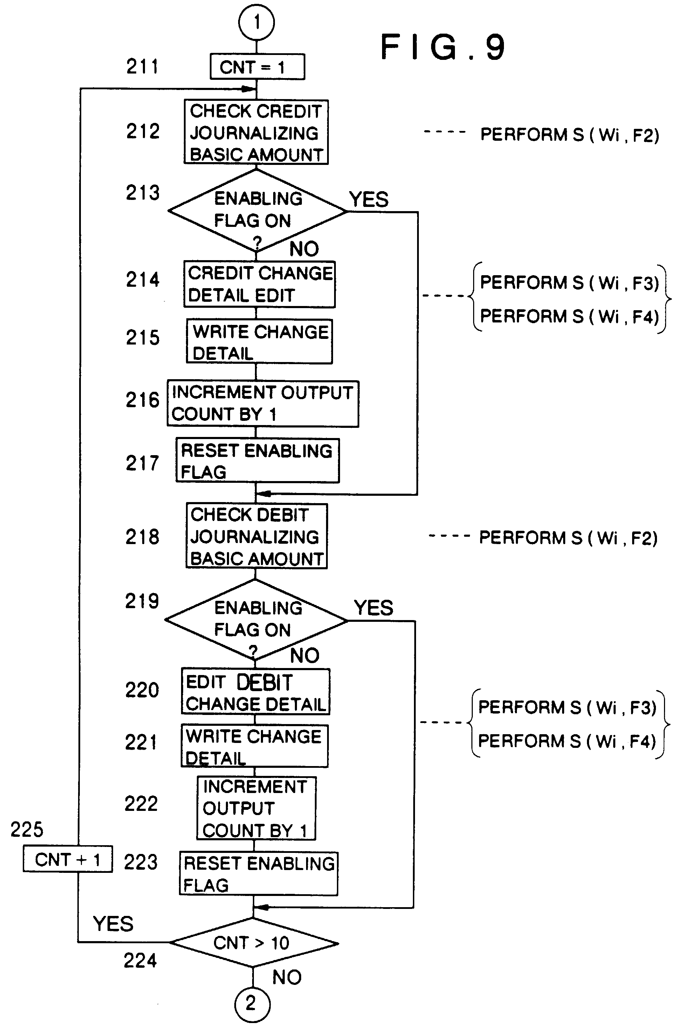

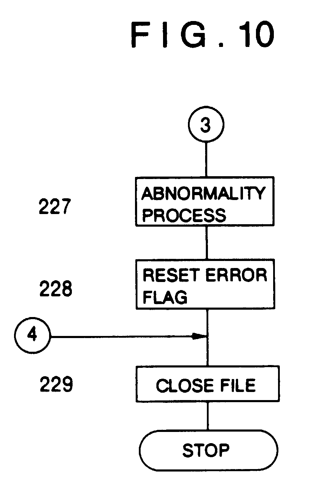

Practical application of the shown embodiment of the architecture of the program to be established on the shown embodiment of the computer system will be discussed herebelow with reference to **Figs. 5** to **10.**

**Figs. 5** to **7** illustrates the application of the shown embodiment of the computer system for a trade management system. For simplification of the disclosure, it is assumed that the shown trade management system has a required specification to perform the following functions:
a) to display a sales data input screen image on the display **18** to receive data input;
b) to verify the input data;
c) if the result of verification is OK, the input data is written in a sales file established in the database **12;**
the processes of a) to c) form a sales data collection process,
d) to display an operation screen image to receive an input of a sales data collection date; and
e) to edit information up to the sales data collection date for printing a ledger or a slip,
the processes of d) and e) form a ledger generation process.

It is further assumed that, in the demanded specification, the following ten data items are to be included in the sales input screen and a sales record in the sales file.
W1: Sales Date
W2: Goods Code
W3: Goods Name
W4: Unit Price
W5: Amount
W6: Total Sales
W7: Ground Total
W8: Shop Code
W9: Shop Name
W10: Number of Sales

In the shown example, W1 to W10 are regarded as "word" assigned for the targeted trade management system. As set forth above, with respect to the foregoing ten words Wi (i = 1 to 10), the W/L unit segments for respective of the following nine functions:
- F1:: verification whether the attribute of the input data is consistent with the attribute of the corresponding word;
- F2:: verification whether the number of digit of the input data is within a predetermined number of digits;
- F3:: verification whether the input data satisfies a predetermined condition defined by definition information of the corresponding word;
- F4:: verification whether a predetermined condition in the logical relationship between the input data and the predetermined other data item is satisfied;
- F5:: storing of the input data of the word to a predetermined portion in a memory, e.g. database;
- F6:: storing of an internal data of the word to a predetermined portion in the memory;
- F7:: performing predetermined arithmetic operation for the input data of the word with the predetermined input data of another word to store the result of the arithmetic operation in the predetermined position of the memory;
- F8:: performing predetermined arithmetic operation for the input data of the word and the internal data of another word to store the result in the predetermined position in the memory; and
- F9:: performing predetermined operation for the internal data of the word and the internal data of another word to store the result in the predetermined portion in the memory.

As set forth above, the W/L unit segments established with respect to respective combination of the words and the process are mutually independent of each other. Respective W/L unit segments thus established will be hereafter identified by S(Wi, Fj (j = 1 to 9)). Further discussion will be given for respective functions set out above, in terms of examples of the W/L unit segments established thereon.

### F1: Attribute Verification

The W/L unit segments established for this function is for checking and verifying that the input data of the specific word **Wi** has the predetermined data attribute. For instance, when the specific word is **W3** corresponding to the goods name as a sequence of characters, verification is performed whether the input data has the attribute of the character. It should be noted that though the discussion here is given for the verification whether the input data has the character attribute, it may be possible to specify the character type, such as Roman character, Greek character, Chinese character or so forth in the attribute verification. When the attribute of the input data is consistent with that of the corresponding word, the input data is presumed to be valid and otherwise, the input data is regarded as invalid.

In the similar manner, the attribute verification function is coupled or associated with respective of the words for establishing the W/L unit segments **S(Wi, F1)**. However, for the word or words which does not require attribute check, the W/L unit segment will not be established.

Typically, the attribute verification as the logic in the W/L unit segment is performed to initially receive the input data of the corresponding word, and to check the attribute of the received input data. Checking attribute per se can be done by any known processes. When the attribute of the input data is coincident with that of the corresponding word, the process is successfully terminated. On the other hand, when the attribute of the input data is inconsistent with that of the corresponding word, then an error flag **E(Wi, F1)** indicative of failure of attribute verification is set. Thereafter, the process is abnormally terminated.

### F2: Digit Number Verification

This function (logic) is adapted to check or verify the input data in terms of the number of digits of the input data. For instance, when the sales date **(W1)** is two digit numerical data representative of the day of month, the input data should not be more than or equal to three digits. Therefore, when the W/L unit segment has the specific word **W1** and the specific function (logic) **F2,** the number of digit of the corresponding input data should have one or two digits. Therefore, when the input data has two or less digits, such input data can be presumed to be correct and thus valid. On the other hand, when the input data has three or more digits, judgement can be made that the input data is NG and thus not valid. Similar processes or functions for checking or verifying the number of digit of the input data in terms of the corresponding word, are performed by respective of the W/L unit segments **S(Wi, F2)**.

Similarly to the foregoing attribute verification function of **F1**, the W/L unit segment will not be established when the word does not require verification of the number of digit of the input data.

In the practical process of the digit number verification, the input data of the specific word is received and checked against a predetermined digit number given for the corresponding word. When the digit number of the input data is smaller than or equal to the given digit number, the input data is presumed to be valid. On the other hand, when the digit number of the input data is greater than the given digit number, then the input data is regarded as invalid. In this case, an error flag **E(Wi, F2)** is set to indicate failure of verification of the digit number of the input data.

### F3: Presence Acceptability Verification

This function or logic is for checking whether the data of the specific word **Wi** is present in an identification table which is designated by the data of the specific word. The identification table may be generated in a master file, a common table or self-holding table or so forth in the database or the program memory depending upon the content of the process to be done.

For instance, in case that the word **Wi** is **W2** corresponding to the goods code, all possible valid goods codes are collectively stored in the identification in the common table. The W/L unit segments **S(Wi,F3)** for this function perform checking of the input data of the corresponding word **Wi** against the content of the common table by seeking the consistent data item, such as the goods code, therein. When the consistent data item is found in the common table, such input data is presumed to be valid and otherwise regarded as invalid.

Similarly to the foregoing functions of **F1** and **F2,** the W/L unit segment will not be established when the word does not require presence acceptability verification of the input data.

The following is the typical process to be performed by the W/L unit segment **S(Wi, F3)**. In conjunction with receiving the input data of the specific word, the identification table is read out. The input data is compared with respective content of the identification table to find or seek the data item in the identification table consistent with the input data. If such search operation is successful to find the consistent data item, the input data is presumed to be valid, and otherwise is regarded invalid. In such case, an error flag **E(Wi, F3)** is set to indicate failure of the presence acceptability verification.

### F4: Verification of Logical Validity between Data

This function is for verification of the input data of the specific word having a predetermined logical relationship with the data of predetermined other item or items satisfying a predetermined condition. Such function is thus used for avoiding illogical input data in connection with the data of the other item having the predetermined relationship with the input data.

For instance, in case of the total sales **(W4),** it has logical relationship in that the input data value has to be consistent with a product of the unit price and the amount. Therefore, in this case, the input data of the word **W4** is compared with the product of the unit price and the amount for verification. When the input data is consistent with the product, it is verified as valid and otherwise regarded as invalid. Respective of the W/L unit segments **S(Wi, F4)** associated with the function **F4** are adapted to perform the similar logical relation verification. However, if the word does not require such logical relationship verification, the W/L unit segment for the corresponding word will not be established.

The **F4** function performs the logical relationship verification with respect to the input data for the specific word in the following manner. Initially, the input data of the specific word is received. At the same time, the data of the predetermined item, to which the input data has to have a given relationship if the input data is normal, is obtained. The input data is then compared with the obtained data of the other item. If the given relationship between the input data and the obtained data is established, the input data is judged as valid data and, otherwise as invalid data. When the input data is judged as invalid, a corresponding error flag **E(Wi, F4)** is set as in the above-discussed functions.

### F5: Input Data Registering Process

The W/L unit segment **S(Wi, F5)** performs the function **F5** for storing the input data of the corresponding word **Wi** to corresponding portions of the self-holding table **AT,** the common table **CT**, the master file **MF,** a data file **DF** or so forth. If the word does not require the process for storing in a memory, the W/L unit segment **S(Wi, F5**) for the corresponding word is not established.

### F6: Internal Data Transferring Process

The W/L unit segment **S(Wi, F6)** for the function **F6** is adapted to transfer for copying or moving the internal data (data stored in the self-holding table **AT,** the common table **CT,** the master file **MF**, the data file **DF** or so forth) of the corresponding word to other designated portion of one or more of the self-holding table **AT,** the common table **CT,** the master file **MF,** the data file **DF.** Similarly to the W/L unit segments in other functions set forth above, no W/L unit segment is established for the word which does not require the internal data transferring process.

### F7: Arithmetic Process between Input Data

The W/L unit segment **S(Wi, F7)** performs the function **F7,** in which the arithmetic operation is performed for the input data of the specific word **Wi** with one or more input data of other word or words **Wn.** The result of the arithmetic operation is stored in the predetermined portion in the self-holding table **AT,** the common table **CT**, the master file **MF,** the data file **DF** or so forth. The W/L unit segment will not be established when the corresponding word does not require the arithmetic operation with the input data of the other words.

### F8: Arithmetic Operation between Input Data and Internal Data

The W/L unit segment **S(Wi, F8)** performs a predetermined arithmetic operation for the input data of the specific word with the internal data (data stored in the self-holding table **AT,** the common table **CT,** the master file **MF,** the data file **DF** or so forth). The result of the arithmetic operation is then stored in the predetermined portion of the self-holding table **AT**, the common table **CT,** the master file **MF,** the data file **DF** or so forth. The W/L unit segment will not be established when the corresponding word does not require the arithmetic operation for the input data thereof with the internal data.

### F9: Arithmetic Operation between Internal Data

The W/L unit segment **S(Wi, F9)** performs a predetermined arithmetic operation for the internal data of the specific word with the internal data of the other word or words. The result of the arithmetic operation is stored in a predetermined portion of the self-holding table **AT,** the common table **CT,** the master file **MF,** the data file **DF** or so forth. The W/L unit segment for the function **F9** will not be established when the corresponding word does not require the arithmetic operation with respect to the internal data thereof.

In addition to the foregoing W/L unit segments for the nine functions, additional W/L unit segments are established for the following functions.

### F10: Initialization Process

W/L unit segments are established for setting the corresponding input data area (prompting items on the data input screen on the display) at a predetermined initial value. This W/L unit segment is established only for the words which requires initial setting of initial value.

### F11: Error Flag Resetting Process

W/L unit segment is established for resetting the error flag which is set in the W/L unit segments associated with the functions **F1, F2, F3** and **F4.** The W/L unit segments for this function **F11** is established only for the necessary words and not established for the words which does not require the error flag resetting process.

### F12: Blink Setting Process

W/L unit segment for this function **F12** is established for blinking a data display area of the corresponding word for alerting the operator for erroneous input for the corresponding word. Similarly to the foregoing, this W/L unit segment is established only for the relevant word and not established for the word which does not require error indication.

### F13: Blink Releasing Process

W/L unit segment for this function **F13** releases blinking of the data display area which is set for blinking by the W/L unit segment for the function **F12.** Similarly to the foregoing, this W/L unit segment is established only for the relevant word and not established for the word which does not require error indication.

As can be appreciated herefrom, the W/L unit segment is established for respective of the individual function relative to respective of the word in a form independent of other W/L unit segments. It should be noted that if judgement whether the W/L unit segment for the corresponding word is necessary or not, is difficult or shculd take long period for study, it may be more efficient to establish the W/L unit segments for all of the words and all of the functions in routine manner.

Next, discussion will be given for the manager program.

As set forth above, the manager program govern activities or behaviors of the W/L unit segments established for respective words and for respective functions. The manager program thus systematically couples a plurality of W/L unit segments for achieving the processes required in the demanded specification, to establish a source program.

The manager program is generated in separated manner with respect to each of process units employing a transaction or job or so forth. In the shown embodiment, the process of the system is separated into the sales data collecting process and the ledger generation process. The manager programs are created with respect to respective processes in separate manner.

Figs. 5 to 7 show the manager program for realizing the sales data collecting process, in which the functions,
a) to display a sales data input screen image on the display **18** to receive data input;
b) to verify the input data;
c) if the result of verification is OK, the input data is written in a sales file established in the database **12;**
are performed. Detailed discussion for the shown manager program will be given herebelow with reference to **Figs. 5** to **7.**

After initiating execution of the manager program for the sales data collecting process, the initial values are set for respective items on the sales data input screen in a process at a step **100.** This process is achieved by performing respective of W/L unit segments **S(Wi, F10)** for the foregoing function **F10.** Then, the initialized sales data input screen is transmitted to a terminal or is displayed on the display screen for prompting the operator to enter the sales data, at a step **101.** The data entered through the terminal or the input device is received at a step **102** to perform the following data processing.

At first, at a step **103**, the attribute verification is performed with respect to respective input data for respective words **Wi.** As can be appreciated, this process can be achieved by performing W/L unit segments **S(Wi, F1)** for respective of the corresponding words. When the error is present in any one of the input data, the error flag **E(Wi, F1)** for the corresponding word **Wi** is set during the process of the corresponding W/L unit segment.

If no error is detected through the process of the data attribute verification at the step **103,** and thus the result of a test at a step **104** is negative, the process jumps to a step **109** to proceed the digit number verification. This can be achieved by performing the W/L unit segments **S(Wi, F2)** for the function **F2**. If the error in digit number of the input data is present, the error flag **E(Wi, F2)** is set for the corresponding word.

When the digit number verification is successfully terminated without detecting any error, the process jumps from the step **109** to a step **115** to perform presence acceptability verification process via a step **110** for error test. This process is achieved by performing the W/L unit segments **S(Wi, F3)** for the function **F3.** When error is found in the presence acceptability verification, the error flag **E(Wi, F3)** is set for the corresponding word.

If no error is detected, the process is advanced to a step **121** via a test step **116** for performing verification of logical relationship between data. As set forth, this is achieved by performing the W/L unit segments **S(Wi, F4)**. Similarly to the foregoing, the error flag **E(Wi, F4)** will be set when the input error in the logical relationship with other data is found, the error flag **E(Wi, F4)** is set for the corresponding word.

When no error is found at the step **121,** the process jumps to a step **127** via a test step **122** to perform editing of the sales record and store in the self-holding table **AT,** the common table **CT,** the master file **MF,** the data file **DF** or so forth. This process is achieved by performing respective of the W/L unit segments **S(Wi, F5), S(Wi, F6), S(Wi, F7), S(Wi, F8)** and **S(Wi, F9).** Then, the process of the sales data collection process is terminated.

On the other hand, when the error is detected during the data attribute verification process at the step **103**, the process is advanced through the test step **104** to a step **105**. At the step **105,** the blinking release process is performed by the W/L unit segments **S(Wi, F13)** for initially resetting all blinking. Then, at a step **106**, the blinking process of the function **F12** is performed by the W/L unit segment **S(Wi, F12)** for the corresponding word, for which the error flag **E(Wi, F1)** is set for blinking the corresponding data display area on the sales data input screen. Subsequently, at a step **107**, the error flag resetting process of the function **F11** is performed by the W/L unit segment **S(Wi, F11).** Thereafter, at a step **108**, the sales data input screen with an error message is re-transmitted or displayed on the display. Thereafter, the process returns to the step 102 for accepting corrected input. With respect to the input data thus re-entered, the similar process to the foregoing is performed.

It should be appreciated that the processes in the steps of **111** ∼ **114, 117** ∼ **120** and **123** ∼ **126** for error indication are substantially the same as those of the steps **105** ∼ **108**.

Next, discussion will be given for another example of application of the present invention. The shown second embodiment is directed to an application of the architecture of the present invention for a specific business processing of a demanded specification.

In the shown embodiment, it is assumed that the demanded specification is "to read a monthly change detail file, to prepare a journalizing item table with respect to elimination (variation reason = "10") and addition (variation reason = "41") and with reference to a property management information file, and write data of journalizing base amount (credit, debit) except for zero amount in a monthly change detail file of the corresponding month after edition (this process will be referred to as "change detail editing process")".

In the demanded specification, the following 23 items of data, 11 items of data in the internal table and other 4 items of data are included in the change detail record.
- W1:: Change Detail Record (Output)
- W2:: Change Detail Key Item
- W3:: Organization Code
- W4:: Title of Account
- W5:: Item Code
- W6:: Concrete Name
- W7:: Evidence Number
- W8:: Reference Number
- W9:: Obtained Date
- W10:: City Code
- W11:: Use Portion
- W12:: Duration
- W13:: Variation Reason
- W14:: Elimination or Addition
- W15:: Number
- W16:: Obtaining Price
- W17:: Project
- W18:: Project Code
- W19:: Distribution Rate of Project
- W20:: Date of Close Accounts
- W21:: Input Number
- W22:: Row Number
- W23:: Remarks
- W24:: Journalizing Item Table
- W25:: Credit Journalizing Item
- W26:: Credit Accounting Title Code
- W27:: Auxiliary Credit Accounting Title Code
- W28:: Presence or Absence of Credit Distribution
- W29:: Credit Journalizing Base Amount
- W30:: Debit journalizing Item
- W31:: Debit Accounting Title Code
- W32:: Auxiliary Debit Accounting Title Code
- W33:: Presence or Absence of Debit Distribution
- W34:: Debit Journalizing Base Amount
- W35:: Property Management Information Record
- W36:: Property Management Information Key Item
- W37:: Change Detail Record (Input)
- W38:: Work Area

Similarly to the foregoing embodiment, the above-listed 38 items constitute words **Wi** (i = 1 - 38) to be assigned for respective of the W/L unit segments. The 38 words **Wi** are coupled with the following functions for establishing respective of the W/L unit segments. Similarly to the former embodiment, respective of the W/L unit segments are independent of others and performs one of the following 9 functions.

### F1: Master Information Matching Check

W/L unit segments **S(Wi,F1)** is established for checking whether the data of the specific word **Wi** is present in a designated master file. As can be appreciated, the W/L unit segment **S(Wi, F1)** is established for respective word **Wi** coupled with the function **F1**.

For example, the valid data as the key items for respective words are recorded in a master in exhaustive fashion. In this case, the W/L unit segment **S(Wi, F1)** is established to make a search on the master for finding the data of the key item in terms of the input data. When the key item matching with that of the input data is present in the master, the input data is judged as valid data, and otherwise as invalid. This W/L unit segment is established with respect to each word. However, as in the former embodiment, the W/L unit segment may not be established for the word which does not require master information matching check.

The W/L unit segment **S(Wi, F1)** receives the corresponding input data. Simultaneously, the master is read out for performing search for the input data thereagainst. When the input data is not present on the master and thus judged"as invalid, an error flag **E(Wi, F1)** is set.

### F2: Constant Value Matching Check

W/L unit segments **S(Wi, F2)** are established for checking whether it satisfies a predetermined condition in comparison with a predetermined constant value.

For example, when the word as a nature in which the credit journalizing basic amount is zero, the W/L unit segment **S(W29, F2)** of the word **W29** compares the data of the credit journalising basic amount and zero for checking. Similarly, the W/L unit segments **S(Wi, F2)** are established for respective words. It should be noted that the W/L unit segment may not be established for the word which does not require the constant value matching check.

The W/L unit segment **S(Wi, F2)** receives the input data of the specific word **Wi.** Then, the input data is compared with the predetermined constant value. If the result of comparison shows satisfaction of the predetermined condition, judgement is made that the input data is valid, and otherwise that the input data is invalid. When the input data is valid, an enabling flag **E(Wi, F2)** is set.

### F3: Input Data Recording Process

W/L unit segments **S(Wi, F3)** are established for storing the input data of the corresponding word to predetermined portion or portions of the self-holding table **AT,** the common table **CT,** the master file **MF,** the data file **DF.** This W/L unit segment **S(Wi, F3)** is established with respect to the function **F3** for respective words **Wi**. However, the W/L unit segment **S(Wi, F3)** will not be established for the word which does not require recording of the input data.

### F4: Internal Data Transferring Process

W/L unit segments **S(Wi, F4)** are established for transferring the internal data (data stored in the self-holding table **AT,** the common table **CT,** the master file **MF,** the data file **DF** or so forth) to another designated portion of the self-holding table **AT,** the common table **CT,** the master file **MF,** the data file **DF** or so forth, by way of copying or moving. The W/L unit segment **S(Wi, F4)** is established for respective words except for the word or words which does not require transferring of the internal data.

### F5: Internal Data Storing Process

W/L unit segments **S(Wi, F5)** are established for storing the internal data of the word **Wi** in the self-holding table **AT,** the common table **CT**, the master file **MF,** the data file **DF** or so forth. This process is established for each of the 11 internal data except for the word which does not require storing the internal data.

In addition to the foregoing functions **F1 ∼ F5** as set forth above, W/L unit segments for auxiliary function is established.

### F6: Initialization Process

W/L unit segments **S(Wi, F6)** are established for setting predetermined initial values for respective of words. This W/L unit segment **S(Wi, F6)** is established for 38 of respective words except for those which do not require setting of the initial value.

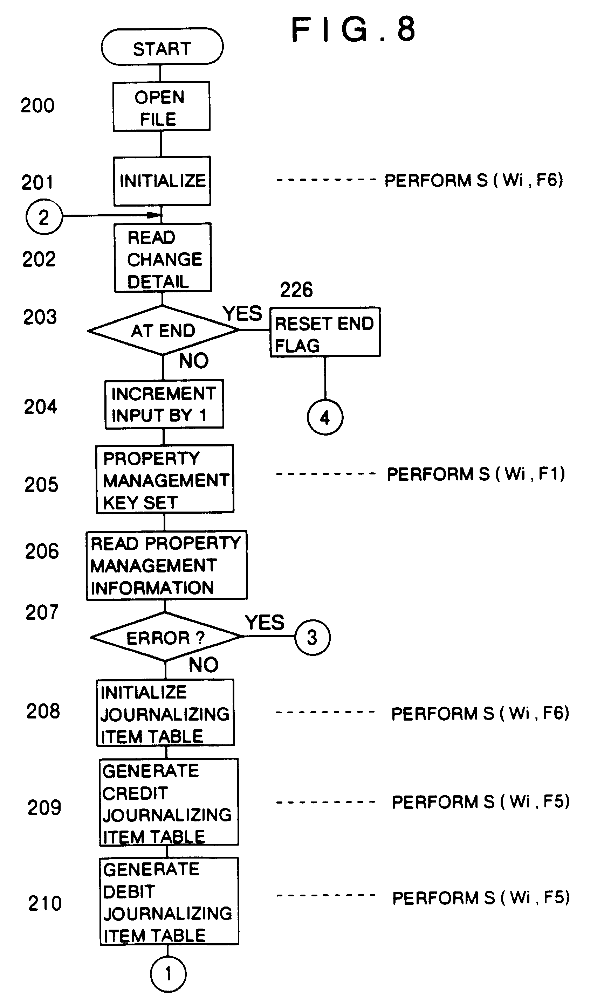

Similarly to the former embodiment, the manager program is established for governing and systematically coupling respective of the W/L unit segments. The manager program is created substantially in the same manner as that of the former embodiment. The manager program for governing the behavior of the above-mentioned W/L unit segments will be discussed herebelow with reference to **Figs. 8** to **10.** The example of **Figs.8** to **10** is directed to a process for accomplishing the depended specification "to read a monthly change detail file, to prepare a journalizing item table with respect to elimination (variation reason = "10") and addition (variation reason = "41") and with reference to a property management information file, and write data of journalizing base amount (credit, debit) except for zero amount in a monthly change detail file of the corresponding month after edition (this process will be referred to as "change detail editing process")".

Operation of the manager program in the shown embodiment will be discussed herebelow with reference to **Figs. 8** to **10.**

In the shown process, at a step **200,** a file open process is performed. Then, at a step **201**, initial values are set for respective items. This process is done by the W/L unit segments **S(Wi, F6).**

Subsequently, at a step **202,** READ process for the input file (change detail file) is performed. At a step **203**, judgement for the end of data is performed. If the end of data, the process jumps to a step **229.**

At a step **205,** key setting process is performed based on the input change detail data and performs the master information matching check. This process is achieved by performing the W/L unit segment **S(Wi, F1)**. If error is found during this process, the error flag **E(Wi, F1)** is set.

If the error is detected during the process with the W/L unit segments **S(Wi, F1)**, the process is advanced to a step **227.** Otherwise, the process is proceeded through steps **208 ∼ 210.** In the steps **209** and **210,** the internal data storing process is performed by the W/L unit segments **S(Wi, F5).**

Next, the constant value matching check is performed at a step **212** which is reached through a step **211** for setting a counter value **CNT** at one. The process is performed by the W/L unit segments **S(Wi, F2).** If no error is found in this process, the enabling flag **E(Wi, F2)** is set.

When no error is found at the step **212**, process is advanced to a step **218** and otherwise, the process is proceeded to perform the process in steps **214** to **217**. In the steps **214** and **215,** the change detail record for the current date is recorded in the data file **DF** after edition. This process is done by the W/L unit segments **S(Wi, F3)** and **S(Wi, F4).** Similar process is performed in the steps **218** to **223**. The process through the steps **212** to **223** is repeated until the counter value **CNT** reaching the predetermined value (10) is detected at a step **224**. When the counter value **CNT** reaches the predetermined value, the process is returned to the step **202.**

Next, at the step **129**, a CLOSE process for the file is performed to terminate the change detail editing process.

As can be appreciated herefrom, since the computer system according to the present invention employs a novel and unique architecture, in which all necessary individual processes are separated into possible simplest unit processes which are coupled with each of associated words to establish the W/L unit segments, and respective W/L unit segments are per se independent and irrelative to other W/L unit segments so that they can be executed irrespective of other segments, and systematically coupled by the manager program for establishing a desired process sequence, each of the W/L unit segments is quite simple to be easily understood and modified, and the manager program is also simple enough to easily understand and modify. Therefore, the computer system according to the present invention facilitates system development with high adaptability for later modification and with remarkably high efficiency and productivity.

The present invention should not be understood as limited to the specific embodiment set out above but to include all possible embodiments which can be embodied within a scope encompassed and equivalents thereof with respect to the feature set out in the appended claims.

## Claims

1. A computer system for establishing an application adapted dedicated system operable on a plurality of data items for performing a plurality of functional processes for said data items, comprising:
an arithmetic means for performing processes defined by an on-going program describing manner and schedule of processing;
a memory means for storing a plurality of information, said memory means including a first storage means for storing a plurality of program segments;
characterised by each of said program segments having an assigned one of said data items and an elemental single process which performs a functional process for said data item and is executable independently of other program segments;
a second storage means for storing at least one governing program for systematically establishing interrelationship between respective program segments for sequential operation thereof; and,
means for triggering said governing program for systematic execution of respective program segments by said arithmetic means in a manner governed by said governing program.

2. A computer system according to claim 1, wherein said plurality of data items consists of a first data item and a second data item and wherein said functional processes comprise a sequence of first and second elementary processes each essentially including single data processing steps, and wherein each of said program segments contains one of said first and second elementary processes.

3. A computer system according to claim 2, wherein said first and second data items correspond to data items in a data file to be handled.

4. A computer system according to claim 2, wherein said first elementary process is a data check process.

5. A computer system according to claim 2, wherein said first elementary process is a write-in process for writing a data of the corresponding data item in a data file.

6. A computer system according to claim 2, wherein said first elementary process in an arithmetic process for performing calculation for a data of the corresponding data item with another data of another data item.

7. A computer system according to claim 2, wherein said sequence of first and second elementary processes has a minimum possible number of processing steps.

8. A method for establishing an application adapted dedicated computer system, operable on a plurality of data items for performing a plurality of functional processes for said data items, said method being characterised by:
establishing a plurality of program segments, each of which is exclusively assigned for one of said data items and having an elemental single process which performs a functional process for said data item and is executable independently of other program segments; and,
establishing a governing program for establishing systematic interrelationship between said program segments for performing a sequence of processes adapted to the dedicated application.

## Patentansprüche

1. Computersystem zur Festlegung eines anwendungsspezifischen Systems, das auf mehreren Datenelementen ausführbar ist, um mehrere funktionelle Prozesse für die Datenelemente durchzuführen, aufweisend:
Eine Recheneinrichtung zum Durchführen von Prozessen, die definiert sind durch fortschreitende Programmbeschreibung und einen Verarbeitungsplan,
eine Speichereinrichtung zum Speichern einer Vielzahl von Informationen, wobei die Speichereinrichtung eine erste Speichereinrichtung zum Speichern mehrerer Programmsegmente aufweist,
dadurch gekennzeichnet, daß jedes der Programmsegmente ein zugeordnetes der Datenelemente und einen elementaren einzelnen Prozeß aufweist, der einen funktionellen Prozeß für das Datenelement durchführt und unabhängig von anderen Programmsegmenten ausführbar ist,
eine zweite Speichereinrichtung zum Speichern von zumindest einem Beherrschungsprogramm zum systematischen Festlegen einer gegenseitigen Beziehung zwischen jeweiligen Programmsegmenten für deren sequentiellen Betrieb, und
eine Einrichtung zum Auslösen des Beherrschungsprogramms für eine systematische Ausführung jeweiliger Programmsegmente durch die Recheneinrichtung in durch das Beherrschungsprogramm beherrschte Weise.

2. Computersystem nach Anspruch 1, wobei die mehreren Datenelemente aus einem ersten Datenelement und einem zweiten Datenelement bestehen, und wobei die funktionellen Prozesse eine Sequenz von ersten und zweiten Elementarprozessen aufweisen, von denen jeder im wesentlichen einzelne Datenverarbeitungsschritte umfaßt, und wobei jedes der Programmsegmente einen der ersten und zweiten Elementarprozesse enthält.

3. Computersystem nach Anspruch 2, wobei die ersten und zweiten Datenelemente Datenelemencen in einer zu verarbeitenden Datendatei entsprechen.

4. Computersystem nach Anspruch 2, wobei der erste Elementarprozeß ein Datenprüfprozeß ist.

5. Computersystem nach Anspruch 2, wobei der erste Elementarprozeß ein Schreibprozeß zum Schreiben von Daten des entsprechenden Datenelements in eine Datendatei ist.

6. Computersystem nach Anspruch 2, wobei der erste Elementarprozeß in einem Rechenprozeß zum Durchführen der Berechnung für Daten des entsprechenden Datenelements mit anderen Daten eines weiteren Datenelements dient.

7. Computersystem nach Anspruch 2, wobei die Sequenz aus den ersten und zweiten Elementarprozessen eine minimal mögliche Anzahl von Prozeßschritten aufweist.

8. Verfahren zum Festlegen eines anwendungsspezifischen Computersystems, das einsetzbar ist für mehrere Datenelemente zum Durchführen von mehreren funktionellen Prozessen für die Datenelemente, wobei das Verfahren gekennzeichnet ist durch die Schritte:
Festlegen von mehreren Programmsegmenten, von denen jedes ausschließlich einem der Datenelemente zugeordnet ist und
einen elementaren einzigen Prozeß aufweist, der einen funktionellen Prozeß für das Datenelement durchführt und unabhängig von weiteren Programmsegmenten ausführbar ist, und
Festlegen eines Beherrschungsprogramms zum Festlegen einer systematischen gegenseitigen Beziehung zwischen den Programmsegmenten zum Durchführen einer Sequenz von Prozessen angepaßt an die spezielle Anwendung.

## Revendications

1. Système informatique pour établir un système dédié orienté applications pouvant être mis en oeuvre sur une pluralité d'éléments de données pour effectuer une pluralité de processus fonctionnels pour lesdits éléments de données, comprenant :
des moyens arithmétiques pour effectuer des processus définis par un programme permanent décrivant la manière et l'ordonnancement de traitement ;
des moyens formant mémoire pour mémoriser une pluralité d'informations, lesdits moyens formant mémoire comprenant des premiers moyens de mémorisation pour mémoriser une pluralité de segments de programme ;
caractérisé en ce que chacun desdits segments de programme a un élément attribué particulier desdits éléments de données et un unique processus élémentaire qui effectue un processus fonctionnel pour ledit élément de données et qui peut être exécuté indépendamment d'autres segments de programme ;
des seconds moyens de mémorisation pour mémoriser au moins un programme d'administration pour établir de manière systématique une relation entre des segments de programme respectifs pour une mise en oeuvre séquentielle de ces derniers ; et
des moyens de déclenchement dudit programme d'administration pour l'exécution systématique de segments de programme respectifs par lesdits moyens arithmétiques d'une manière administrée par ledit programme d'administration.

2. Système informatique selon la revendication 1, dans lequel ladite pluralité d'éléments de données est constituée d'un premier élément de données et d'un second élément de données et dans lequel lesdits processus fonctionnels comprennent une séquence de premier et second processus élémentaires, chacun comprenant sensiblement des étapes uniques de traitement de données, et dans lequel chacun desdits segments de programme contient l'un desdits premier et second processus élémentaires.

3. Système informatique selon la revendication 2, dans lequel lesdits premier et second éléments de données correspondent à des éléments de données dans un fichier de données à manipuler.

4. Système informatique selon la revendication 2, dans lequel ledit premier processus élémentaire est un processus de vérification de données.

5. Système informatique selon la revendication 2, dans lequel ledit premier processus élémentaire est un processus d'écriture pour écrire une donnée de l'élément de données correspondant dans un fichier de données.

6. Système informatique selon la revendication 2, dans lequel ledit premier processus élémentaire est un processus arithmétique pour effectuer un calcul pour une donnée de l'élément de données correspondant avec une autre donnée d'un autre élément de données.

7. Système informatique selon la revendication 2, dans lequel ladite séquence de premier et second processus élémentaires a un nombre minimal possible d'étapes de traitement.

8. Procédé pour établir un système informatique dédié orienté applications pouvant être mis en oeuvre sur une pluralité d'éléments de données pour effectuer une pluralité de processus fonctionnels pour lesdits éléments de données, ledit procédé étant caractérisé par:
l'établissement d'une pluralité de segments de programme, chacun d'entre eux étant attribué de manière exclusive à un élément particulier desdits éléments de données et ayant un unique processus élémentaire qui effectue un processus fonctionnel pour ledit élément de données et qui peut être exécuté indépendamment d'autres segments de programme ; et
l'établissement d'un programme d'administration pour établir une relation systématique entre lesdits segments de programme pour effectuer une séquence de processus conçus pour l'application dédiée.
